(19) Europäisches Patentamt
European Patent Office
Office européen des brevets

(11) Publication number: **0 255 800 B1**

(12) **EUROPEAN PATENT SPECIFICATION**

(45) Date of publication of patent specification: **17.07.91**

(51) Int. Cl.[5]: **C07C 259/10**, C07C 327/00, A01N 37/38

(21) Application number: **87810412.4**

(22) Date of filing: **21.07.87**

(54) **Benzohydroxamic acid derivatives.**

(30) Priority: **04.08.86 US 892987**
**12.09.86 US 907348**

(43) Date of publication of application:
**10.02.88 Bulletin 88/06**

(45) Publication of the grant of the patent:
**17.07.91 Bulletin 91/29**

(84) Designated Contracting States:
**AT BE CH DE ES FR GB GR IT LI NL**

(56) References cited:
**EP-A- 0 133 155**

(73) Proprietor: **SANDOZ AG**
**Lichtstrasse 35**
**CH-4002 Basel(CH)BE CH ES FR GB GR IT LI NL**

Proprietor: **SANDOZ-PATENT-GMBH**
**Humboldtstrasse 3**
**W-7850 Lörrach(DE)DE**

Proprietor: **SANDOZ-ERFINDUNGEN Verwaltungsgesellschaft m.b.H.**
**Brunner Strasse 59**
**A-1235 Wien(AT)AT**

(72) Inventor: **Williams, John W.**
**561 Moffett Road**
**Lake Bluff Illinois 60044(US)**

EP 0 255 800 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to hydrazides and hydroxamic acid derivatives of benzoic acid, their use as herbicides and to agricultural compositions containing the same.

The present invention more particularly relates to compounds of formula I:

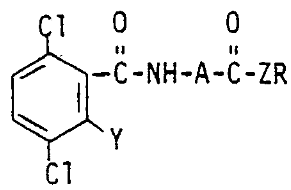

I

wherein Y is Cl or $OCH_3$,
A is O-alkylene of I to 5 carbon artoms, O-alkenylene of 3 to 6 carbon atoms in which the unsaturation is non-adjacent the oxygen atom thereof or NH-alkylene in which the alkylene is of I to 5 carbon atom, the O- and NH- thereof being attached to the NH which is adjacent to A,
Z is oxygen or sulfur,
R is H, $C_{1-12}$alkyl, $C_{3-8}$alkenyl, $C_{3-8}$alkynyl, $C_{2-10}$haloalkyl containing 1 to 6 halogens of atomic weight of 18 to 80, $C_{2-10}$alkoxyalkyl, $C_{3-10}$alkoxyalkoxyalkyl, $C_{3-8}$cycloalkyl or $C_{4-8}$cycloalkenyl optionally substituted by I or 2 halogens of atom weight of I8 to 8O or $C_{1-2}$alkyl groups; $C_{3-8}$cycloalkyl-$C_{1-3}$alkyl or $C_{4-8}$cycloalkenyl-$C_{1-3}$alkyl optionally mono- or di-ring substituted by halo of atom weight of I8 to 8O or $C_{1-2}$alkyl groups or group $G_1$

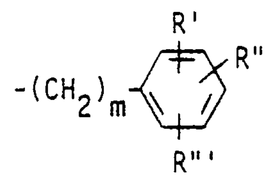

($G_1$)

in which m is 0 to 3,
R′ and R″ are independently H, $C_{1-4}$alkyl, $C_{1-4}$alkoxy, $C_{1-4}$alkylthio, $CF_3$, halo of atomic weight of from I8 to 8O or $NO_2$,
R‴ is H, $C_{1-3}$alkyl or halo of atomic weight of I8 to 8O,
or
two of R′, R″ and R‴ together form $C_{1-2}$alkylenedioxy with the other being H,
and salt forms thereof.

When in the compounds of the formula I, A is O-alkylene or NH-alkylene, the alkylene may be straight chain or branched. Any such branching, e.g. methyl groups, may occur once or twice on any carbon atom of the linear portion of the alkylene moiety. Preferably, the alkylene portion of the O-alkylene moiety is of I to 3 carbons and contains no more than a single methyl branch, or is unbranched. More preferably, A is $-OCHR_1$, wherein $R_1$ is H or methyl, and it is particularly preferred that A is O-methylene, i.e. $-OCH_2$.

When A is O-alkenylene, the alkenylene portion may also be straight chain or branched. Preferably, the connecting linear alkenylene portion is of 3 or 4 carbon atoms and contains no more than a single methyl branch or is unbranched, and is more preferably unbranched, e.g. allylene.

In general, Z is preferably oxygen.

When R is or contains an alkyl, alkenyl, alkynyl or alkoxy group, the same may be straight chain or branched, provided that any alkenyl or alkynyl group desirably comprises at least a three linear carbon atom chain. When R is alkyl, it is preferably $C_{1-8}$alkyl, branched or unbranched, more preferably $C_{1-6}$alkyl. When R is haloalkyl, it preferably contains one or two halogen atoms or one or two $CF_3$ groups, and is preferably $C_{1-6}$haloalkyl. When R is or contains a cycloalkyl or cycloalkenyl group, such ring is preferably unsubstituted and is more preferably $C_{3-6}$cycloalkyl. When R is cycloalkylalkyl or cycloalkenylalkyl, the alkyl portion may be straight chain or branched, but is more preferably unbranched and of I or 2 carbon atoms, and it is particularly preferred that such alkyl is methyl ($-CH_2-$). When R is or contains phenyl, it is generally preferred that m is O or I. Preferably, the phenyl portion or group is unsubstituted, mono-substituted or disubstituted. In particular, it is generally preferred that R′ is H, $C_{1-4}$alkyl, $C_{1-2}$alkoxy, $CF_3$, halo of atomic weight of from I8 to 8O or nitro, R″ is H and R‴ is H, $C_{1-2}$ alkyl or halo of atomic weight of from I8 to 8O.

More preferably, R′ is H, $C_{1-3}$alkyl, methoxy, $CF_3$, F, Cl or nitro, R″ is H and R‴ is H, $CH_3$, F or Cl.

The alkali metal and ammonium salts are the generally preferred salt forms. When R is H mono- and disalt forms may be produced, the mono-salt forms are generally preferred.

In a preferred subgroup of compounds of formula I

A is $C_{1-3}$O-alkylene,

R is H, $C_{1-6}$alkyl, $C_{3-6}$alkenyl, $C_{2-5}$haloalkyl comprising I to 6 halogens $C_{2-6}$alkoxyalkyl, $C_{3-6}$alkoxyalkoxyalkyl, $C_{3-6}$cycloalkyl, $C_{3-6}$cycloalkyl-$C_{1-3}$alkyl, or group $G_1$ in which

m is O or I,

R′ is H, $C_{1-4}$alkyl, $C_{1-4}$alkoxy, halogen, $NO_2$,

R″ is H, halogen or $C_{1-4}$alkyl,

or R′ and R″ together form $C_{1-2}$alkylenedioxy

and R‴ is H or halogen,

any halogen substituent being selected from Cl and F.

Y is preferably $OCH_3$.

A is preferably $OCHR_1$, most preferably $OCH_2$.

The compounds of the formula I in free form or in salt form may be prepared by reacting the compound of the formula II:

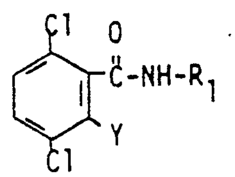

II

wherein $R_1$ is OH or $NH_2$,

and Y is as defined above

with a compound of formula III:

X-A-CO-ZR    III

wherein X is halogen

and A, Z and R are as defined above,

followed where desired by transesterification of the thus obtained compounds of formula I in which R is other than H to other compounds of formula I in which R is other than H, and optionally reacting the thus obtained compounds of formula I with a salt forming base.

X is preferably chlorine or bromine.

The preparation of the hydroxamic acid derivatives of formula I is conveniently carried out at temperatures of from about 25°C to I5O°C, preferably 6O°C to I2O°C in the presence of a base and in a solvent media. Preferred bases are the alkali metal hydroxides such as sodium hydroxide or potassium hydroxide. Preferred solvents are the lower alkanols such as or ethanol or a mixture of water and a lower alkanol, e.g. water and ethanol.

The preparation of the hydrazides of formula I is conveniently carried out at temperatures of from about 2O°C to I2O°C, preferably 4O°C to 9O°C, in the presence of a base and in a solvent media. A typically preferred base for such reaction is sodium carbonate. Preferred solvents include the acyclic and cyclic ethers such as tetrahydrofuran.

The compounds of the formula I in which R is other than H may be produced from other compounds of the formula I in which R is other than H by the well-known process of transesterification. In such procedure a compound of the formula I is subjected to reaction with the alcohol or thioalcohol corresponding to the ester desired to be formed, i.e. a compound HZR in the presence of transesterification catalyst and in an appropriate solvent. Transesterification catalysts are well known and include the Lewis acids such as the metal alkoxides, e.g. titanium n-butoxide.

The reaction may be carried out at varying temperatures typically of from about 25°C to I5O°C, more typically about 5O°C to I2O°C. The preferred starting compounds of the formula I are those in which -ZR is O-$C_{1-2}$alkyl, more preferably the methyl ester, and the equilibrium shifted in favour of the desired ester of the formula I by evaporating the resulting $C_{1-2}$alkanol.

The compounds of the formula I have the tautomeric form:

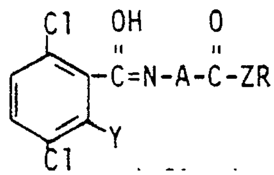

wherein A, Z, Y and R are as defined. Such enols of the compounds I are of acid character and form, and accordingly the compounds I will also form salts. even when R is other than H. Since the compounds in which R is H form salts, the compounds of the formula I in which R is H form di-salts. When R is H, salt formation preferentially takes at the ZH site.

The compounds of formula I and their salts may be recovered from the reaction mixture by standard procedures.

The salt forms may be obtained from the free acid anol form according to known procedures and vice versa.

The preferred salt forms of the compounds of the formula I are the alkali metal salts, particularly the sodium and potassium salts, and the ammonium salt forms including the secondary and tertiary ammonium salt forms, such as dimethylammonium salt, isopropylammonium, salt, diethanolammonium salt, triethanolammonium salt and the 2-hydroxyethyloxyethylammonium salt. Other salt forms which may be prepared include the hydrazinium salt forms which may be derived from unsubstituted or substituted hydrazine, e.g. hydrazine, $NH_2N(CH_2CH_3)_2$ and the like.

The compounds of the formula II may be prepared from the corresponding benzoic acid chloride. Insofar as the production of starting materials used in preparation of the compounds of the formula I and its salts is not particularly described, these compounds are either known or may be prepared from known materials by conventional methods.

The compounds of the formula I (including the agriculturally acceptable salts thereof) are useful because they control the growth of plants. By plants it is meant germinating seeds, merging seedlings and established vegetation including underground portions. In particular, the compounds are useful as herbicides as indicated by causing damage to both monocotyledoneous and dicotyledoneous plants in various standard evaluations for determining such effects. The herbicidal effects are exhibited both pre- and postemergence the plants. Such herbicidal effects indicate that the compounds of the formula I are particularly of interest in combatting weeds (unwanted plants) in a locus in which such weeds are present.

The compounds of the formula I are indicated mainly to be stronger acting against dicotyledoneous plants than monocotyledoneous plants. Relatively less toxicity towards crops than towards weeds is further indicated. Hence, the compounds are of particular interest as selective herbicides to combat weeds in a crop locus, particularly as locus of a monocotyledoneous crop such as, for example, corn (maize), oats, rice, wheat, sorghum and the like, especially corn.

The present invention therefore also provides a method of combatting weeds in a locus which comprises applying to the locus a herbicidally effective amount of a compound of the invention. When selective action is desired in a crop locus, the amount applied will be sufficient to combat weeds without substantially damaging the crop.

For general herbicidal as well as selective herbicidal use of the compounds of the invention, the particular amounts to be applied will vary depending upon recognized factors such as the compound employed, the plants primarily in the locus, the timing, mode and formulation in application, the various conditions of treatment such as soil and weather and the like. However, in general, satisfactory results in weed control are usually obtained upon application of the compounds of the invention at a rate in the range of from O.l to lO kg/hectare, more usually O.3 to 5 kg/hectare, and preferably O.5 to 3 kg/hectare, the application being repeated as necessary. When used in crops, the application usually wil not exceed about 5 kg/hectare, and is usually in the range of O.l to 4 kg/hectare, preferably O.5 to 3 kg/hectare.

For practical use as herbicides, the compounds of the formula I may be and are preferably employed in herbicidal compositions comprising a herbicidal effective amount of the compound and an inert carrier which is agriculturally acceptable in the sense of not, by reason of its presence, poisoning the agricultural environment including the immediate soil of application or any crops present therein or otherwise being unsafe for application. Such compositions of formulations may contain O.Ol% to 99% by weight of active ingredient, from O to 2O% by weight of agriculturally acceptable surfactants and l to 99.99% by weight of the inert carrier. Higher ratios of surfactant to active ingredient are sometimes desirable and are achieved by incorporation into the formulation or by tank mixing. Application forms of composition typically contain between O.Ol and 25% by weight of active ingredient, but lower or higher levels of active ingredient can, of

course, be present depending on the intended use and the physical properties of the compound. Concentrate forms of composition intended to be diluted before use generally contain between 2 and 90%, preferably between IO and 80% by weight of active ingredient.

Useful compositions or formulations of the compounds of the invention include dusts, granules, pellets, suspension concentrates, wettable powders, emulsifiable concentrates and the like. They are obtained by conventional manner, e.g. by mixing the compounds of the invention with the inert carrier. More specifically, liquid compositions are obtained by mixing the ingredients, fine solid compositions by blending and, usually grinding, suspensions by wet milling and granules and pellets by impregnating or coating (preformed) granular carriers with the active ingredient or by agglomeration techniques.

For example, dusts can be prepared by grinding and blending the active compound with a solid inert carrier such as talc, clay, silica and the like.

For example, dusts can be prepared by grinding and blending the active compound with a solid inert carrier such as talc, clay, silica and the like. Granular formulations can be prepared by impregnating the compound, usually dissolved in a suitable solvent, onto and into granulated carriers such as the attapulgites or the vermiculites, usually of a particle size range of from about 0.3 to I.5 mm. Wettable powders, which can be dispersed in water or oil to any desired concentration of the active compound, can be prepared by incorporating wetting agents into concentrated dust compositions.

Alternatively, the compounds of the invention may be used in micro-encapsulated form.

Agriculturally acceptable additives may be employed in the herbicidal compositions to improve the performance of the active ingredient and to reduce foaming, caking and corrosion.

Surfactant as used herein means agriculturally acceptable material which imparts emulsifiability, spreading, wetting, dispersibility or other surface-modifying properties. Examples of surfactants are sodium lignin sulphonate and lauryl sulphate.

Carriers as used herein mean a liquid or solid material used to dilute a concentrated material to a usable or desirable strength. For dusts or granules it can be e.g. talc, kaolin or diatomaceous earth, for liquid concentrate froms, a hydrocarbon such as xylene or an alcohol such as isopropanol; and for liquid application forms, e.g. water or diesel oil.

The compositions of this invention can also comprise other compounds having biological activity, e.g. compounds having similar or complementary herbicidal activity or compounds having antidotal, fungicidal or insecticidal activity.

A typical herbicidal composition, according to this invention, is illustrated by the following Examples A, B and C in which the quantities are in parts by weight.

**EXAMPLE A**

Preparation of a Dust
Product of Example 2 IO parts
Powdered Talc 90 parts

The above ingredients are mixed in a mechanical grinder-blender and are ground until a homogeneous, free-flowing dust of the desired particle size is obtained. This dust is suitable for direct application to the site of the weed infestation.

**EXAMPLE B**

Preparation of Wettable Powder

25 Parts of a compound of formula I, e.g. the compound of Example 2 hereinafter, are mixed and milled with 25 parts of synthetic fine silica, 2 parts of sodium lauryl sulphate, 3 parts of sodium ligninsulphonate and 45 parts of finely divided kaolin until the mean particle size is about 5 micron. The resulting wettable powder is diluted with water before use to a spray liquor with the desired concentration.

**EXAMPLE C**

Preparation of Emulsifiable Concentrate (EC)

I3.37 Parts of the compound of Example 7 are mixed in a beaker with I.43 parts of Toximul 360A (a mixture of anionic and non-ionic surfactants containing largely anionic surfactants), 5.6I parts of Toximul

360A (a mixture of anionic and non-ionic surfactants containing largely non-ionic surfactants), 23.79 parts of dimethylformamide and 55.8 parts of Tenneco 500-100 (predominantly a mixture of alkylated aromatics such as xylene and ethylbenzene) until solution is effected. The resulting EC is diluted with water for use.

## FINAL COMPOUNDS

Example I: [(3,6-Dichloro-2-methoxybenzoyl)aminooxy]acetic acid

To a solution of 86.34 g of sodium hydroxide in 1.2 litre of water was added 900 ml of 95% ethanol and 240 g of 3,6-dichloro-2-methoxybenzohydroxamic acid. To aid dissolution, an additional 300 ml 95% ethanol and 60 ml $H_2O$ were added. A solution of 153.12 g bromoacetic acid in 120 ml of 95% ethanol was then added to the reaction mixture over 0.5 hours, followed by 60 ml of water. The mixture was then heated to reflux for 3 hours, cooled to ambient temperature, and 150 ml 20 % HCl added. The reaction mixture was then extracted twice with ethyl acetate. The ethyl solutions were combined, washed with brine, and dried over $MgSO_4$ overnight, then filtered and solvent evaporated in vacuo The residue was crystallized from chloroform to yield [(3,6-dichloro-2-methoxybenzoyl)aminooxy]acetic acid as a white solid (m.p. 145-154 ° C).

Example 2: Methyl[(3,6-dichloro-2-methoxybenzoyl)aminooxy]acetate

To a solution of 2.15 g of potassium hydroxide in 50 ml of methanol was added 7.55 g of 3,6-dichloro-2-methoxy benzohydroxamic acid followed by stirring until dissolution was obtained. To this solution was added dropwise 3.03 ml methylbromoacetate in 25 ml of methanol. The reaction mixture was refluxed for 2 hours and allowed to stir overnight at ambient temperature. To the rection mixture was added 0.36 g of additional potassium hydroxide and the mixture heated to reflux for 4 hours, then cooled, filtered, and the filtrate concentrated in vacuo to give a crude semi-solid product. This crude product was taken up in methylene chloride and washed with water, 5% aqueous $NaHCO_3$, brine, then dried over $MgSO_4$, filtered and evaporated in vacuo to give a viscous oil. The oil crystallized from an ethyl acetate-hexane mixture to the title product as a white solid, m.p. 102-105 ° C

Example 3: n-Butyl[(3,6-dichloro-2-methoxybenzoyl)aminooxy]acetate

To 161.8 g of methyl[(3,6-dichloro-2-methoxybenzoyl)aminooxy]acetate was added 80 g of n-butyl alcohol, 600 ml of toluene, and 9.5 g of titanium n-butoxide. The mixture was stirred and heated 85 ° C for 2 hours to drive off a methanol/toluene mixture. The heat was then maintained at 95-100 ° C to distill off n-butanol/toluene. The reaction mixture was cooled to 40 ° C and 150 ml of 1 M HCl added. The mixture was then washed with 1 M HCl, water, then saturated $NaHCO_3$ solution, and then dried over $MgSO_4$, filtered, and evaporated in vacuo to yield the title product as a white solid, m.p. 68-71 ° C.

Example 4: Dimethylammonium[(3,6-dichloro-2-methoxy)-benzoyl)aminooxy]acetate

To a solution of excess dimethylamine in diethyl ether (prepared by shaking 50 ml of 40% aqueous dimethylamine and 50 ml of diethyl ether and decanting the ether layer) was added a solution of 3 g of [-(3,6-dichloro-2-methoxybenzoyl)aminooxy]acetic acid in 50 ml of tetrahydrofuran. During the addition, an oil formed and settled out. After 1 hour, the ether/tetrahydrofuran layer was decanted and the resulting oil was washed several times with ethyl acetate and dried under high vacuum at 100 ° C for 24 hours to obtain the titled salt as a foamy solid which hardens on standing. NMR is consistent with its structure:

'H NMR ($D_2O$,90MHz) 2H(q) 7.24 ppm, 2H(s) 4.26 ppm, 3H(s) 3.80 ppm, 6H(s) 2.80 ppm
in which q = quartet d = doublet m = multiplet s = singlet t = triplet br = broad.

Example 4A:

The following additional mono-salts may be readily prepared.

Example 4A:

The following additional mono-salts may be readily prepared.

| Ex.No. | R | Characterisation |
|---|---|---|
| 4A-1 | $Na^+$ | m.p. 150-150°C (dec.) |
| 4A-2 | $^+NH_2(CH_2CH_3)_2$ | light brown glass; 'HNMR($D_2O$,90MHz) 2H(q) 7.25 ppm, 2H(s) 4.26 ppm, 3H(s) 3.81 ppm, 4H(q) 2.90 ppm, 6H(t) 1.13 ppm. |
| 4A-3 | $^+NH_3CH(CH_3)_2$ | tan foamy solid; 'HNMR($D_2O$,90MHz) 2H(q) 7.26 ppm, 2H(s) 4.27 ppm, 3H(s) 3.81 ppm, 1H(m) 3.35 ppm, 6H(d) 1.16 ppm. |
| 4A-4 | $^+NH_3(CH_2)_2O(CH_2)_2OH$ | amber oil; 'HNMR ($D_2O$,90MHz) 2H(q) 7.19 ppm, 2H(s) 4.15 ppm, 3H(s) 3.81 ppm, 6H(m) 3.56 ppm, 2H(t) 3.03 ppm |
| 4A-5 | $^+NH(CH_2CH_3)_2$ $CH_2CH_2O$ | amber oil; 'HNMR($CDCl_3$,90MHz) 2H(q) 7.23 ppm, 2H(brs) 5.70 ppm, 2H(s) 4.50 ppm, 2H(t) 4.45-ppm 3H(s) 3.92 ppm, 6H(m) 3.15 ppm, 2H(t) 2.32 ppm, 12H(m) 1.71-1.13 ppm, 3H(t) 0.90 ppm. |
| 4A-6 | $^+NH(CH_2CH_3)_2$ $CH_2CH_2O$ | yellow glass; 'HNMR($CDCl_3$,90MHz) 5H(m) 7.38-6.65 ppm, 2H(br s) 6.0 ppm, 2H(s) 4.49 ppm, 2H(t) 4.33 ppm, 3H(s) 3.91 ppm, 2H(t) 3.35 ppm, 4H(q) 3.19 ppm, 6H(t) 1.29 ppm. |

Example 5 : [(3,6-Dichloro-2-methoxybenzoyl)aminooxy]acetic acid bis-isopropylamine salt

To a solution of 4.0 g of [3,6-dichloro-2-methoxybenzoyl)aminooxy]acetic acid in 250 ml diethyl was added l.6 ml of isopropylamine. The resulting mixture was stirred for l5 minutes and the resulting solid collected by vacuum filtration. The crude solid was washed with three portions of diethyl ether and dried under high vacuum at ambient temperature to obtain the titled di-salt form as a foamy tan solid.
NMR is consistent with its structure:
'H NMR ($D_2O$, 90MHz) 2H(q) 7.24 ppm, 2H(s) 4.32 ppm, 3H(s) 3.8l ppm 2H(m) 3.35 ppm, l2H(d) l.l8 ppm.

Example 5A

Following the basic procedure of Example 5 there was also obtained the [(3,6-dichloro-2-methoxybenzoyl)aminooxy]acetic acid bis-diethylamine salt as light brown glass.
NMR is consistent with its structure:
'NMR ($D_2O$, 90MHz) 2H(q) 7.2l ppm, 2H(s) 4.l8 ppm, 3H(s), 3.79 ppm, 8H(q) 2.92 ppm, l2H(t) l.l5 ppm.

Example 6: Ethyl[(3,6-dichloro-2-methoxybenzoyl)hydrazino]acetate

To a solution of 8 g of 3,6-dichloro-2-methoxybenzoyl hydrazine and 7 g of ethyl bromoacetate in 200 ml of tetrahydrofuran, was added 8 g sodium carbonate. The resulting mixture was stirred at ambient temperature for l6 hours, then refluxed for 8 hours and filtered. The filtrate was evaporated in vacuo to yield a crude solid which was recrystallized from diethyl ether to obtain the titled product as a white crystalline solid, m.p. 93-96 °C.

Example 7

Additional representative compounds of the invention are exemplified in Table I below.

**TABLE 1** Compounds of formula I wherein Y is $OCH_3$

| Cpd.No. | A | ZR | m.p.(°C.) |
|---|---|---|---|
| 7-7 | $-OCH_2-$ | O-isopropyl | 88-92 |
| 7-8 | " | O-ethyl | 57-61 |
| 7-9 | " | S-methyl | - |
| 7-10 | " | O-n-propyl | 44-47 |
| 7-11 | " | O-t-butyl | 141-143 |
| 7-12 | " | O-isobutyl | 68-68.5 |
| 7-13 | " | O-sec-butyl | 111-112 |
| 7-14 | " | O-sec-pentyl | 70-72 |
| 7-15 | " | O-hexyl | 63-64.5 |
| 7-16 | $-O-CH_2-$<br>\|<br>$CH_3$ | O-methyl | 102.5-103 |
| 7-17 | $-O-CH_2-$<br>\|<br>$CH_3$ | O-ethyl | thick oil |
| 7-18 | $-O-(CH_2)_3-$ | O-methyl | yellow semi-solid |
| 7-19 | $-OCH_2-$ | O-cyclopentyl | 82-85 |
| 7-20 | " | $O-CH_2CF_3$ | 79-82 |
| 7-21 | " | $O-CH-CF_3$<br>\|<br>$CF_3$ | 159-161 |
| 7-22 | " | O-p-chlorophenyl | 139-140 |
| 7-23 | " | O-benzyl | 130-131 |
| 7-24 | $-OCH_2CH=CH-$ | O-ethyl | 78-82 |
| 7-25 | $-OCH_2CH=CH-$ | O-methyl | oily solid |

| Cpd.No. | A | ZR | m.p.(°C.) |
|---|---|---|---|
| 7-26 | $-OCH_2CH_2CH_2$ | H | thick oil |
| 7-27 | $-NHCH(CH_3)-$ | O-ethyl | yellow liquid |
| 7-28 | $-OCH_2$ | O-pentyl | 64-65°C. |
| 7-29 | " | O-octyl | waxy solid |
| 7-30 | " | O-decyl | colorless oil |
| 7-31 | " | $O-CH_2CH=C(CH_3)_2$ | 57-58 |
| 7-32 | " | O-cyclopropyl-methyl | 45-50 |
| 7-33 | " | O-phenyl | - |
| 7-34 | " | O-m-methylbenzyl | 106-107 |
| 7-35 | " | O-o-methylbenzyl | 102-104 |
| 7-36 | " | O-p-methylbenzyl | 155-157 |
| 7-37 | " | O-p-isopropylbenzyl | 141-143 |
| 7-38 | " | O-o-chlorobenzyl | 97-98 |
| 7-39 | " | O-m-chlorobenzyl | 103-105 |
| 7-40 | " | O-2,6-dichlorobenzyl | 161-162 |
| 7-41 | " | O-2,4-dichlorobenzyl | 107-108 |
| 7-42 | " | O-3,4-dichlorobenzyl | 120-121 |
| 7-43 | " | O-o-fluorobenzyl | 67-70 |
| 7-44 | " | O-3,5-dichlorobenzyl | 95-97 |
| 7-45 | " | O-m-fluorobenzyl | 95-97 |
| 7-46 | " | O-p-fluorobenzyl | 133-134 |
| 7-47 | " | $O-m-CF_3$-benzyl | 94-95 |
| 7-48 | " | $O-p-CF_3$-benzyl | 140-141 |

| Cpd.No. | A | ZR | m.p.($^{o}$C.) |
|---|---|---|---|
| 7-49 | $-OCH_2-$ | O-o-methoxybenzyl | 75-78 |
| 7-50 | " | O-m-methoxybenzyl | 65-70 |
| 7-51 | " | O-p-methoxybenzyl | 145-146 |
| 7-52 | " | O-3,4-methylene-dioxybenzyl | 117-118 |
| 7-53 | " | O-o-nitrobenzyl | 105-106 |
| 7-54 | " | O-p-nitrobenzyl | 128-129 |
| 7-55 | " | O-3-methyl-4-nitrobenzyl | 97-98 |
| 7-56 | " | O-3-nitro-4-chlorobenzyl | 134-135 |
| 7-57 | " | S-benzyl | 118-119 |
| 7-58 | " | $O-CH_2CH_2OCH_2CH_2OCH_3$ | 65-68 |
| 7-59 | " | $O-CH_2CH_2$-phenyl | |
| 7-60 | " | $O-CH_2(2-CH_3-3,5-diNO_2-$phenyl) | |
| 7-61 | " | $O-CH_2CH_2O-C_2H_5$ | |

Example 8: Methyl [(2,3,6-trichloro-benzoyl)aminooxy]acetate

To a solution of 4.9 g of potassium hydroxide in 50 ml of water and 350 ml of tetrahydrofuran and 23.2 g of 2,3,6-trichloro-benzohydroxamic acid was added ll.6 g of methyl bromoacetate. The mixture was stirred at room temperatures for 60 hours, the solvents evaporated in vacuo, the residue dissolved in ethyl acetate and washed twice with 5% HCl, 5% sodium bicarbonate, again with 5% HCl, then 50% NaCl and dried over $MgSO_4$. The solvent was evaporated, then 50% NaCl and dried over $MgSO_4$. The solvent was evaporated in vacuo and the residue chromatographed using high pressure liquid chromatography. The fraction containing the product was crystallized from ethanol/hexane to yield methyl[(2,3,6-trichlorobenzoyl)-aminooxy]acetate, m.p. l02-l05 °C.

Example 9: [(2,3,6-Trichlorobenzoyl)aminooxy]acetic acid

To l.25 g of potassium carbonate in l5 ml of water and 35 ml of tetrahydrofuran was added 2.0 g of methyl [(2,3,6-trichlorobenzoyl)aminooxy]acetate and the aqueous layer acidified with concentrated hydrochloric acid. The resulting aqueous layer was extracted with two portions of ethylacetate, the combined ethyl acetate layers were dried over $MgSO_4$ and concentrated in vacuo to obtain [2,3,6-trichlorobenzoyl)-aminooxy]acetic acid, m.p. l45-l47 °C

Example l0: n-Butyl[(2,3,6-trichlorobenzoyl)-aminooxy]acetate

A mixture of l.8 g of methyl[2,3,6-trichlorobenzoyl)-aminooxy]acetate, 50 ml of n-butanol and approximately 20 mg of O-p-tolnenesulfonic acid was warmed to l00 °C overnight. Excess alcohol was evaporated

in vacuo and the residue taken up in chloroform, washed with aqueous 5% sodium bicarbonate, dried over $MgSO_4$, filtered, and evaporated in vacuo to give the titled compound as a liquid.

Example II:

Additional representative compounds of the invention are exemplified in Table II below.

TABLE II: Compounds of formula I wherein Y is Cl.

| Cpd. No. | A | ZR | m.p. (°C.) |
|---|---|---|---|
| 11-1 | $-OCH_2-$ | O-isopropyl | - |
| 11-2 | " | O-ethyl | wax |
| 11-3 | " | O-n-propyl | liquid |
| 11-4 | " | O-t-butyl | - |
| 11-5 | " | O-hexyl | - |
| 11-6 | " | O-cyclopentyl | - |
| 11-7 | " | O-p-chlorophenyl | - |
| 11-8 | " | O-benzyl | - |
| 11-9 | " | O-cyclopropylmethyl | |
| 11-10 | " | $O-CH_2$(2,4-diClphenyl) | |

## INTERMEDIATES

Example A: 3,6-Dichloro-2-methoxybenzoyl chloride

To 4.0 kg thionyl chloride, was added 5.0 kg of 3,6-dichloro-2-methoxybenzoic acid. This was stirred and heated to reflux (ca. 60° C) for 1.5 hours. The reaction mixture was allowed to cool and excess thionyl chloride evaporated in vacuo. The crude product was then distilled under reduced pressure to give 3,6-dichloro-2-methoxybenzoyl chloride as a liquid, b.p. 117° C at 0.6 mm Hg.

Example B: 3,6-Dichloro-2-methoxybenzohydroxamic acid

To a solution of 36 g of potassium carbonate in 350 ml of water was added 2.5 litres diethyl ether and 181 g hydroxylamine hydrochloride. The mixture was cooled to 5-10° C and 477 g of 3,6-dichloro-2-methoxybenzoyl chloride was added dropwise at a rate that maintained the reaction temperature below 10° C. After addition was complete, the reaction mixture was stirred for 1 hour and allowed to stand overnight at ambient temperature. The crude white solid product was obtained by filtration. The crude solid was washed with water, then treated with 1.5 litres of 4.5 M HCl, filtered, washed again with $H_2O$ and dried to give 3,6-dichloro-2-methoxybenzohydroxamic acid as a white solid, m.p. 150° C.

Example C: 3,6-Dichloro-2-methoxybenzoylhydrazine

To a solution of 0.22 mol hydrazine in 100 ml chloroform at -10° C was added 0.1 mol of 3,6-dichloro-2-methoxybenzoyl chloride. The mixture was stirred at ambient temperature for 2 hours, filtered, and the filtrate evaporated in vacuo. The residue was crystallized from methanol and water, then recrystallized from chloroform and hexane to obtain the titled product, m.p. 144-145° C

The herbicidal toxicity of the compounds of this invention can be illustrated by established testing techniques known to the art, such as pre-and post-emergence testing.

The herbicidal activity of the compounds of this invention was demonstrated by experiments carried out for the pre-emergence control of a variety of weeds. In these experiments small plastic greenhouse pots filled with dry soil were seeded with the various weed seeds. Twenty-four hours or less after the seeding, the pots were sprayed with water until the soil was wet and the test compounds formulated as aqueous emulsions of acetone solutionscontaining emulsifiers were sprayed at the indicated concentrations on the surface of the soil.

After spraying, the soil containers were placed in the greenhouse and provided with suplementary heat as required and daily or more frequent watering. The plants were maintained under these conditions for a period of from l4 to 2l days, at which time the conditions of the plants and the degree of injury to the plants was rated on a scale of from O to lO, as follows: O = no injury, l, 2 = slight injury, 3, 4 = moderate injury, 5, 6 = moderately severe injury, 7, 8, 9 = severe injury, lO = death and NE indicated not emerged. The pre-emergence herbicidal activity of representative compounds is demonstrated by the following data set out in Tables l, 3, 4 and 5.

The herbicidal activity of the compounds of this invention was also demonstrated by experiments carried out for the post-emergence control of a variety of weeds. In these experiments the compounds to be tested were formulated as aqueous emulsions and sprayed at the indicated dosage on the foliage of the various weed species that have attained a prescribed size. After spraying, the plants were placed in a greenhouse and watered daily or more frequently. Water was not applied to the foliage of the treated plants. The severity of the injury was determined 2l days after treatment and was rated on the scale of from O to lO heretobefore described. The effectiveness of representative compounds as post emergence herbicide is demonstrated by the data set forth below in Tables 2 and 6.

The data indicate that the compounds of formula I are selective in various crops, particularly in corn.

The latin names of the plants/weeds set out in the following Tables are given here below:

Wild Mustard- Brassica kaber
Bindweed- Convolvulus arvensis
Pigweed- Amaranthus retroflexis
Jimsonweed- Datura stramonium
Velvet Leaf- Abutilon theophrasti
Morningglory- Ipomoea purpurea
Yellow Foxtail- Setaria esculentus
Barnyard Grass- Echinochloa crus-galli
Johnson Grass- Sorghum halepense
Wild Oats- Avena fatua
Crabgrass- Digitaria sanguinalis
Spragletop- Leptochloa dubia
Cheatgrass- Bromus secalinus
Corn- Zea mays
Oats- Avena sativa
Yellow Nutsedge- Cyperus esculentus

TABLE 1

Pre-emergence Herbicidal Activity

Compounds of Examples 1 and 3

| | Rates of Application (lbs./acre)* | | | | | | | |
|---|---|---|---|---|---|---|---|---|
| | Compound of Example 1 | | | | Compound of Example 3 | | | |
| | 0.25 | 0.125 | 0.062 | 0.031 | 0.25 | 0.125 | 0.062 | 0.031 |
| Wild Mustard | 10 | 9 | 9 | 7 | 9 | 10 | 7 | 6 |
| Bindweed | 10 | 9 | 7 | 2 | 9 | 9 | 6 | 3 |
| Pigweed | 10 | 9 | 5 | 1 | 9 | 9 | 5 | 0 |
| Jimsonweed | 10 | 9 | NE | 1 | NE | NE | 3 | NE |
| Velvet Leaf | 10 | 10 | 9 | 1 | 9 | 5 | 4 | 5 |
| Morningglory | 10 | 10 | 9 | 7 | 9 | 9 | 7 | 5 |
| Yellow Foxtail | 3 | 0 | 0 | 0 | 6 | 0 | 0 | 0 |
| Barnyard Grass | 7 | 1 | 1 | 0 | 8 | 3 | 0 | 0 |
| Johnson Grass | NE | 1 | 0 | 0 | 8 | 6 | 0 | 0 |
| Wild Oats | 3 | 1 | 0 | 0 | 2 | 1 | 0 | 0 |
| Crabgrass | 0 | 0 | 0 | 0 | 7 | 0 | 0 | 0 |
| Sprangletop | 0 | 0 | 0 | 0 | 1 | 0 | 0 | 0 |
| Cheatgrass | 7 | 0 | 0 | 0 | 3 | 4 | 0 | 0 |
| Soybeans | 10 | 10 | 9 | 8 | 9 | 10 | 8 | 7 |
| Cotton | 9 | 7 | 5 | 2 | 9 | 8 | 5 | 5 |
| Pintobean | 10 | 10 | 9 | 9 | 9 | 9 | 8 | 8 |
| Alfalfa | 10 | 7 | 0 | 0 | 9 | 9 | 5 | 3 |
| Wheat | 7 | 4 | 1 | 0 | 6 | 5 | 4 | 1 |
| Rice | 9 | 6 | 1 | 0 | 9 | 6 | 5 | 0 |
| Sorghum | 6 | 2 | 0 | 0 | 9 | 6 | 5 | 0 |
| Corn | 0 | 0 | 0 | 0 | 1 | 0 | 0 | 0 |
| Oats | 2 | 0 | 0 | 0 | 2 | 1 | 1 | 0 |
| Yellow Nutsedge | NE | 0 | 0 | 0 | 9 | 0 | 8 | 0 |

*1 lb/acre = 1.12 kg/ha

TABLE 2

Post-emergence Herbicidal Activity

Compounds of Examples 1 and 3

| Plant | Rates of Application (lbs./acre)* | | | | | | | |
|---|---|---|---|---|---|---|---|---|
| | Compound of Example 1 | | | | Compound of Example 3 | | | |
| | 0.25 | 0.125 | 0.062 | 0.031 | 0.25 | 0.125 | 0.062 | 0.031 |
| Wild Mustard | 9 | 10 | 9 | 8 | 9 | 7 | 8 | 5 |
| Bindweed | 10 | 10 | 8 | 4 | 8 | 7 | 5 | 3 |
| Pigweed | 9 | 10 | 10 | 7 | 10 | 10 | 10 | 3 |
| Jimsonweed | 10 | 10 | 9 | 4 | 9 | 9 | 9 | 9 |
| Velvet Leaf | 10 | 8 | 3 | 4 | 9 | 7 | 5 | 3 |
| Morningglory | 10 | 10 | 7 | 6 | 9 | 9 | 9 | 9 |
| Yellow Foxtail | 5 | 0 | 0 | 0 | 6 | 2 | 0 | 0 |
| Barnyard Grass | 1 | 0 | 0 | 0 | 8 | 6 | 1 | 0 |
| Johnson Grass | 7 | 2 | 0 | 0 | 3 | 2 | 0 | 0 |
| Wild Oats | 0 | 0 | 0 | 0 | 0 | 0 | 0 | 0 |
| Crabgrass | 0 | 0 | 0 | 0 | 0 | 0 | 0 | 0 |
| Sprangletop | 0 | 0 | 0 | 0 | 0 | 0 | 0 | 0 |
| Cheatgrass | 0 | 0 | 0 | 0 | 0 | 0 | 0 | 0 |
| Soybeans | 10 | 10 | 9 | 8 | 9 | 9 | 7 | 8 |
| Cotton | 9 | 8 | 7 | 4 | 5 | 5 | 4 | 4 |
| Pintobean | 10 | 10 | 10 | 9 | 10 | 9 | 9 | 9 |
| Alfalfa | 9 | 8 | 4 | 2 | 7 | 5 | 1 | 0 |
| Wheat | 3 | 1 | 0 | 0 | 2 | 1 | 0 | 0 |
| Rice | 1 | 0 | 0 | 0 | 0 | 0 | 0 | 0 |
| Sorghum | 0 | 0 | 0 | 0 | 1 | 0 | 0 | 0 |
| Corn | 0 | 0 | 0 | 0 | 3 | 0 | 0 | 0 |
| Oats | 0 | 0 | 0 | 0 | 0 | 0 | 0 | 0 |
| Yellow Nutsedge | 0 | 0 | 0 | 0 | 0 | 0 | 0 | 0 |

* 1 lb/acre = 1.12 kg/ha

TABLE 3

Pre-emergence Herbicidal Activity

Compounds of Examples 2, 4, 5 and 6

| Plant | Rate of Application (lbs./acre) * | | | | | | | |
|---|---|---|---|---|---|---|---|---|
| | Example 4 | | Example 5 | | Example 6 | | Example 2 | |
| | 0.25 | .125 | 0.25 | .125 | 0.25 | .125 | 0.25 | .125 |
| Velvetleaf | 9 | 7 | 9 | 7 | 8 | 6 | 10 | 10 |
| Pigweed | 9 | 9 | 9 | 9 | 8 | 6 | 10 | 9 |
| Wild Mustard | 9 | 9 | 9 | 7 | 7 | 6 | 10 | 9 |
| Bindweed | 9 | 7 | 10 | 5 | 7 | 6 | 10 | 10 |
| Jimsonweed | NE | 6 | NE | 8 | 8 | 6 | 10 | 9 |
| Morningglory | 9 | 9 | 9 | 9 | 7 | 6 | 10 | 10 |
| Cotton | 9 | 7 | 8 | 7 | 8 | 6 | 10 | 9 |
| Soybeans | 9 | 9 | 9 | 9 | 10 | 9 | 10 | 9 |
| Sorghum | 5 | 2 | 6 | 3 | 0 | 0 | 7 | 5 |
| Wild Oats | 2 | 1 | 3 | 1 | 0 | 0 | 3 | 1 |
| Cheatgrass | 3 | 0 | 4 | 2 | 0 | 0 | 9 | 3 |
| Yellow Nutsedge | NE | 0 | 2 | 2 | 0 | 0 | 1 | 0 |
| Crabgrass | 3 | 0 | NE | 5 | 0 | 0 | 9 | 0 |
| Barnyard Grass | 3 | 1 | 8 | 4 | 0 | 0 | 9 | 8 |
| Yellow Foxtail | 2 | 0 | 5 | 3 | 0 | 0 | 3 | 0 |
| Johnson Grass | 7 | 2 | 8 | 1 | 0 | 0 | 7 | 6 |
| Sprangletop | 4 | 0 | 1 | 0 | 0 | 0 | 0 | 0 |
| Alfalfa | 9 | 8 | 9 | 9 | 8 | 8 | 10 | 9 |
| Rice | 8 | 6 | 6 | 3 | 2 | 0 | 9 | 9 |
| Corn | 0 | 0 | 0 | 0 | 0 | 0 | 0 | 0 |
| Oats | 1 | 0 | 2 | 0 | 0 | 0 | 1 | 1 |
| Wheat | 5 | 4 | 6 | 4 | 2 | 0 | 7 | 5 |
| Pintobean | 10 | 9 | 10 | 9 | 9 | 8 | 10 | 10 |

* 1 lb/acre = 1.12 kg/ha

TABLE 4

Pre-emergence Herbicidal Activity

| Compound | Rate of Application (lbs./acre) * | | | | | | | |
|---|---|---|---|---|---|---|---|---|
| | 7-19 | | 7-20 | | 7-23 | | 7-24 | |
| Plant | 0.25 | .125 | 0.25 | .125 | 0.25 | .125 | .125 | .125 |
| Velvetleaf | 9 | 7 | 10 | 10 | 9 | 7 | 9 | 8 |
| Pigweed | 9 | 7 | 9 | 10 | NE | 10 | 9 | 8 |
| Wild Mustard | 9 | 8 | 10 | 9 | NE | NE | 9 | NE |
| Bindweed | 9 | 9 | 10 | 9 | 9 | 9 | 6 | 4 |
| Jimsonweed | 8 | NE | 10 | 8 | NE | NE | NE | 7 |
| Morningglory | 9 | 10 | 10 | 10 | 9 | 8 | 9 | 9 |
| Cotton | 7 | 9 | 9 | 8 | 9 | 6 | 8 | 7 |
| Soybeans | 10 | 10 | 10 | 9 | 10 | 9 | 9 | 9 |
| Sorghum | 7 | 3 | - | - | 4 | 0 | - | - |
| Wild Oats | 1 | 1 | 3 | 0 | 0 | 0 | 3 | 0 |
| Cheatgrass | 4 | 4 | 4 | 1 | 4 | 1 | 3 | 1 |
| Yellow Nutsedge | NE | NE | 0 | 0 | NE | 4 | NE | 0 |
| Crabgrass | 2 | 3 | 0 | 0 | 5 | 0 | 2 | 5 |
| Barnyard Grass | 7 | 4 | 9 | 2 | 4 | 5 | 1 | 0 |
| Yellow Foxtail | 5 | 0 | 4 | 0 | 8 | 3 | 0 | 0 |
| Johnson Grass | 7 | 6 | 7 | 7 | 8 | 1 | 0 | 5 |
| Sprangletop | 2 | 1 | - | - | 7 | 1 | - | - |
| Alfalfa | 9 | 9 | - | - | 9 | 9 | - | - |
| Rice | 6 | 5 | - | - | 8 | 7 | - | - |
| Corn | 0 | 0 | 1 | 0 | 2 | 0 | 0 | 0 |
| Oats | 1 | 0 | - | - | 0 | 0 | - | - |
| Wheat | 6 | 4 | 5 | 3 | 6 | 4 | 2 | 1 |
| Pintobean | 10 | 10 | - | - | 9 | 9 | - | - |

* 1 lb/acre = 1.12 kg/ha

TABLE 6

Post-emergence Herbicidal Activity

| Plant | Rates of Application (lbs./acre) * Compound of Example 7 0.25 | 0.125 | 0.062 | Compound 7-15 0.25 | 0.125 | 0.062 |
|---|---|---|---|---|---|---|
| Wild Mustard | 9 | 9 | 9 | 9 | 9 | 9 |
| Bindweed | 10 | 10 | 8 | 5 | 3 | 5 |
| Pigweed | 10 | 10 | 9 | 10 | 10 | 10 |
| Jimsonweed | 10 | 10 | 8 | 9 | 9 | 9 |
| Velvet Leaf | 9 | 8 | 6 | 8 | 7 | 6 |
| Morningglory | 10 | 10 | 9 | 9 | 9 | 9 |
| Yellow Foxtail | 4 | 2 | 0 | 4 | 0 | 0 |
| Barnyard Grass | 4 | 1 | 0 | 6 | 4 | 1 |
| Johnson Grass | 8 | 2 | 0 | 3 | 2 | 0 |
| Wild Oats | 3 | 1 | 0 | 0 | 0 | 0 |
| Crabgrass | 0 | 0 | 0 | 0 | 0 | 0 |
| Sprangletop | 0 | 0 | 0 | 0 | 0 | 0 |
| Cheatgrass | 0 | 0 | 0 | 0 | 0 | 0 |
| Soybeans | 10 | 10 | 9 | 8 | 8 | 7 |
| Cotton | 9 | 8 | 5 | 5 | 4 | 6 |
| Pintobean | 10 | 10 | 10 | 10 | 10 | 9 |
| Alfalfa | 9 | 9 | 7 | 3 | 0 | 0 |
| Wheat | 7 | 3 | 1 | 2 | 1 | 0 |
| Rice | 1 | 0 | 0 | 0 | 0 | 0 |
| Sorghum | 0 | 0 | 0 | 0 | 0 | 0 |
| Corn | 0 | 0 | 0 | 3 | 0 | 0 |
| Oats | 3 | 1 | 0 | 0 | 0 | 0 |
| Yellow Nutsedge | 0 | 0 | 0 | 0 | 0 | 0 |

* 1 lb/acre = 1.12 kg/ha

TABLE 5

Pre-emergence Herbicidal Activity

| Plant | Rates of Application (lbs./acre) * | | | | | |
|---|---|---|---|---|---|---|
| | Compound of Example 7 | | | Compound 7-15 | | |
| | 0.25 | 0.125 | 0.062 | 0.25 | 0.125 | 0.062 |
| Wild Mustard | 10 | 9 | 9 | 9 | 9 | 7 |
| Bindweed | 9 | 9 | 4 | 9 | 9 | 8 |
| Pigweed | 9 | 7 | 4 | 9 | 6 | 5 |
| Jimsonweed | NE | 7 | 6 | NE | NE | 9 |
| Velvet Leaf | 10 | 9 | 4 | 9 | 9 | 5 |
| Morningglory | 10 | 9 | 8 | 9 | 10 | 7 |
| Yellow Foxtail | 1 | 0 | 0 | 5 | 1 | 0 |
| Barnyard Grass | 8 | 5 | 1 | 8 | 7 | 4 |
| Johnson Grass | 2 | 3 | 0 | 8 | 5 | 0 |
| Wild Oats | 2 | 1 | 0 | 1 | 1 | 0 |
| Crabgrass | 9 | 0 | 0 | 8 | 0 | 0 |
| Sprangletop | 0 | 0 | 0 | 5 | 0 | 0 |
| Cheatgrass | 7 | 1 | 0 | 3 | 2 | 0 |
| Soybeans | 10 | 10 | 9 | 10 | 9 | 7 |
| Cotton | 9 | 8 | 6 | 9 | 6 | 5 |
| Pintobean | 10 | 9 | 9 | 10 | 9 | 7 |
| Alfalfa | 10 | 4 | 0 | 9 | 8 | 4 |
| Wheat | 5 | 2 | 1 | 4 | 4 | 3 |
| Rice | 9 | 9 | 0 | 9 | 9 | 4 |
| Sorghum | 6 | 2 | 0 | 4 | 1 | 0 |
| Corn | 0 | 0 | 0 | 3 | 0 | 0 |
| Oats | 1 | 0 | 0 | 1 | 1 | 0 |
| Yellow Nutsedge | 1 | 0 | 0 | 3 | 3 | 0 |

* 1 lb/acre = 1.12 kg/ha

A number of the compounds of formula I was screened in similar tests employing a plant set comprising Abutilon theophrasti, Amaranthus retroflexus, Sinapis alba, Solanum nigrum, Bromus tectorum, Setaria viridis, Avena fatua and Echinochloa crus-galli and application rates corresponding with I and 4 kg/ha. The results indicate a herbicidal activity of the compounds of formula I which is superior over similar prior art compounds. This is illustrated in the following Table 7 for compounds of formula I, in which Y is chlorine, over the compound of Example I.2 of the EPA I33 I55 (Standard).

TABLE 7

| Test Compound | Example 10 | | | | Compound 11-2 | | | | Standard | | | |
|---|---|---|---|---|---|---|---|---|---|---|---|---|
| appl. time | pre-em | | post-em | | pre-em | | post-em | | pre-em | | post-em | |
| appl. rate kg/ha | 1 | 4 | 1 | 4 | 1 | 4 | 1 | 4 | 1 | 4 | 1 | 4 |
| Abutilon | 8 | 10 | 8 | 10 | 10 | 10 | 8 | 9 | 8 | 8 | 4 | 6 |
| Amaranthus | 10 | 10 | 9 | 9 | 10 | 10 | 9 | 10 | 5 | 7 | 4 | 6 |
| Sinapis | 9 | 9 | 7 | 9 | 9 | 10 | 8 | 8 | 4 | 7 | 4 | 5 |
| Solanum | 10 | 10 | 9 | 9 | 9 | 10 | 9 | 10 | 3 | 8 | 7 | 8 |
| Bromus | 5 | 7 | 4 | 5 | 4 | 8 | 4 | 6 | 1 | 9 | 5 | 6 |
| Setaria | 7 | 8 | 6 | 8 | 8 | 8 | 5 | 7 | 1 | 6 | 1 | 3 |
| Avena | 8 | 8 | 3 | 3 | 8 | 8 | 4 | 5 | 1 | 4 | 1 | 7 |
| Echinochloa | 8 | 8 | 5 | 7 | 8 | 9 | 5 | 5 | 1 | 5 | 1 | 3 |

Various compounds are tested in more advanced experiments on a plant-set comprising the diotyledoneous weeds, Abutilon theophrasti, Amaranthus retroflexus, Capsella bursa-pastoris, Cassia obtusifolia, Chenopodium alba, Datura stramonium, Galium aparine, Ipomoea purpurea, Portulaca oleracea, Senecio vulgaris, Sida spinosa, Solanum nigrum, Stellaria media, and the monocotyledoneous seeds Agropyron repens, Cyperus rotundus, Alopecurus myosuroides, Apera spica-venti, Avena fatua, Bromus tectorum, Digitaria sanguinelis, Echinochloa crus-galli, Eleusine indica, Lolium perenne, Poa annua, Setaria faberi and Sorghum halepense, employing an application rate corresponding with I.O and O.25 kg/ha. Examples of compounds showing in the latter tests, after pre-emergence application, a herbicidal activity of the order of that observed with dicamba, or higher, are compounds of formula I wherein Y is methoxy, A is $OCH_2$ and ZR is benzyloxy mono- or di-substituted in the phenyl ring by substituents selected from halogen (F, Cl), $CH_3$ and $NO_2$, such as the compounds 7-34, 7-36, 7-38, 7-39, 7-4I, 7-42, 7-44, 7-46 and 7-63. Thus the compounds 7-34, 7-46 and 7-53 show a better pre-emergence activity against dicots and monocots and the compounds 7-38, 7-39, 7-4I, 7-42 and 7-44 a better pre-emergence activity againstdicots as dicamba.

A selection of compounds of formula I was also tested for soil persistence:

Test compounds were sown in arable soil 7, I4 and 28 days after treatment of the soil surface with a test compound, formulated as an aqueous spray emulsion, at an application rate corresponding with O.66 kg of compound of formula I per hectare. The visual evaluation of the damage to the seedlings is effected I2 days after the seeding. The results showed a better soil persistence than dicamba for all the test compounds.

The following tables give an idea of the relative persistence of the compounds of formula I as compared with dicamba. The results are given for seedlings of seed sown I4 days after spray application of the test compound to the soil surface.

TABLE 8 (Test a)

| Compound 7- | 43 | 45 | 46 | 53 | 54 | 55 | 56 | Dicamba |
|---|---|---|---|---|---|---|---|---|
| Senecio vulgaris | 80 | 65 | 75 | 60 | 60 | 60 | 65 | 30 |
| Solanum nigrum | 80 | 95 | 95 | 70 | 75 | 80 | 90 | 40 |
| Amaranthus retroflexus | 100 | 95 | 100 | 95 | 100 | 100 | 95 | 35 |
| Sinapis alba | 90 | 95 | 90 | 90 | 90 | 100 | 90 | 30 |

TABLE 9 (Test b)

| Compound 7- | 34 | 36 | 37 | 47 | 48 | 52 | Dicamba |
|---|---|---|---|---|---|---|---|
| Senecio vulgaris | 60 | 70 | 50 | 80 | 70 | 40 | 20 |
| Solanum nigrum | 90 | 95 | 85 | 90 | 90 | 60 | 20 |
| Amaranthus retroflexus | 100 | 100 | 100 | 100 | 100 | 100 | 30 |
| Sinapis alba | 90 | 80 | 95 | 90 | 100 | 90 | 20 |

Further tests have been run to establish the soil mobility of the compounds of the invention. In general, the compounds of formula I are less mobile in the soil than dicamba. This is particularly true for compounds of formula I wherein R is $(CH_2)_mC_6H_2R'R''R'''$ in which m is zero or I and R', R" and R‴ are as defined above, more particularly for said compounds wherein m is I.

The compounds of the invention are accordingly indicated for use as herbicides, particularly as pre-emergence herbicides against monocotyledoneous and dicotyledoneous weeds, more particularly against dicotyledoneous weeds. They are biologically different from dicamba, in that they are primarily indicated for use as pre-emergence herbicides, whereas dicamba is essentially a post-emergence herbicide. The test results indicate also that the compounds are more persistent and are less mobile in the soil than dicamba, which is advantageous from the efficacy and ecological point of view.

**Claims**

**Claims for the following Contracting States : BE, CH, DE, FR, GB, GR, IT, LI, NL.**

**1.** Compounds of formula I

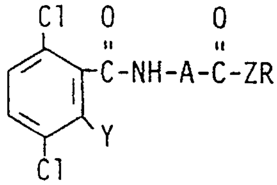

I

wherein Y is Cl or $OCH_3$,
A is O-alkylene of I to 5 carbon artoms, O-alkenylene of 3 to 6 carbon atoms in which the unsaturation is non-adjacent the oxygen atom thereof or NH-alkylene in which the alkylene is of I to 5 carbon atom, the O- and NH- thereof being attached to the NH which is adjacent to A,
Z is oxygen or sulfur,
R is H, $C_{1-12}$alkyl, $C_{3-8}$alkenyl, $C_{3-8}$alkynyl, $C_{2-10}$haloalkyl containing I to 6 halogens of atomic weight of I8 to 8O, $C_{2-10}$alkoxyalkyl, $C_{3-10}$alkoxyalkoxyalkyl, $C_{3-8}$cycloalkyl or $C_{4-8}$cycloalkenyl optionally substi-

tuted by l or 2 halogens of atom weight of 18 to 80 or $C_{1-2}$alkyl groups; $C_{3-8}$cycloalkyl-$C_{1-3}$alkyl or $C_{4-8}$cycloalkenyl-$C_{1-3}$alkyl optionally mono- or di-ring substituted by halo of atom weight of 18 to 80 or $C_{1-2}$alkyl groups; or group $G_1$

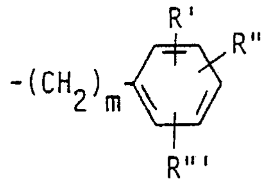

$(G_1)$

in which m is 0 to 3,
R′ and R″ are independently H, $C_{1-4}$alkyl, $C_{1-4}$alkoxy, $C_{1-4}$alkylthio, $CF_3$, halo of atomic weight of from 18 to 80 or $NO_2$,
R‴ is H, $C_{1-3}$alkyl or halo of atomic weight of 18 to 80,
or
two of R′, R″ and R‴ together form $C_{1-2}$alkylenedioxy with the other being H,
in free form or in salt form.

2. A compound of Claim l, wherein
A is $C_{1-3}$O-alkylene,
R is H, $C_{1-6}$alkyl, $C_{3-6}$alkenyl, $C_{2-5}$haloalkyl comprising l to 6 halogens, $C_{2-6}$alkoxyalkyly, $C_{3-6}$alkoxyalkoxyalkyl, $C_{3-6}$cycloalkyl, $C_{3-6}$cycloalkyl-$C_{1-3}$alkyl, or group $G_1$ in which
m is 0 or l,
R′ is H, $C_{1-4}$alkyl, $C_{1-4}$alkoxy, halogen, $NO_2$,
R″ is H, halogen or $C_{1-4}$alkyl,
or R′ and R″ together form $C_{1-2}$alkylenedioxy
and R‴ is H or halogen,
any halogen substituent being selected from Cl and F.

3. A compound of Claim 2, wherein Y is $OCH_3$ and A is $OCH_2$.

4. A compound of Claim 3, wherein R is group $G_1$.

5. A compound of Claim 4, wherein m is l.

6. A compound of Claim 5, wherein R′ is $CH_3$, F, Cl or $NO_2$, R″ is H, Cl or $CH_3$ and R‴ is H.

7. The compound of Claim 6, in which
a) R′ is 4-$CH_3$ and R″ is H, or
b) R′ is 3-$CH_3$ and R″ is H, or
c) R′ is 2-Cl and R″ is 4-Cl, or
d) R′ is 3-Cl and R″ is 4-Cl, or
e) R′ is 3-Cl and R″ is H, or
f) R′ is 2-Cl and R″is H, or
g) R′ is 3-Cl and R″ is 5-Cl, or
h) R′ is 4-F and R″ is H, or
i) R′ is 4-$NO_2$ and R″ is H.

8. Process of preparing a compound of formula I, stated in Claim l, in free form or in salt form, which comprises reacting the compound of the formula II:

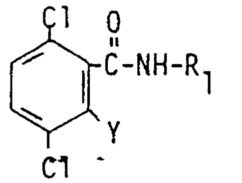

II

wherein $R_1$ is OH or $NH_2$,
and Y is as defined in Claim I,
with a compound of formula III:

X-A-CO-ZR III

wherein X is halogen
and A, Z and R are as defined in Claim I,
followed where desired by transesterification of the thus obtained compounds of formula I in which R is other than H to other compounds of formula I in which R is other than H, and optionally reacting the thus obtained compounds of formula I with a salt forming base.

9. A herbicidal composition comprising a compound of formula I according to any one of Claims I to 7 in free form or in agriculturally acceptable salt form, and an agriculturally acceptable carrier.

10. A method of combatting weeds which comprises applying to the weeds or the locus thereof a herbicidally effective amount of a compound of formula I according to any one of Claims I to 7 in free form or in agriculturally acceptable salt form.

11. The method of Claim IO, wherein the compounds are applied pre-emergence the plants.

12. The method of Claim IO or II which comprises applying in a corn (maize) locus the compounds at a rate sufficient to combat weeds without substantially damaging the corn.

**Claims for the following Contracting States : AT, ES**

1. Process of preparing a compound of formula I

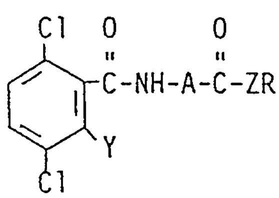

I

wherein Y is Cl or $OCH_3$,
A is O-alkylene of I to 5 carbon artoms, O-alkylene of 3 to 6 carbon atoms in which the unsaturation is non-adjacent the oxygen atom thereof or NH-alkylene in which the alkylene is of I to 5 carbon atom, the O- and NH- thereof being attached to the NH which is adjacent to A,
Z is oxygen or sulfur,
R is H, $C_{1-12}$alkyl, $C_{3-8}$alkenyl, $C_{3-8}$alkynyl, $C_{2-10}$haloalkyl containing I to 6 halogens of atomic weight of I8 to 8O, $C_{2-10}$alkoxyalkyl, $C_{3-10}$alkoxyalkoxyalkyl, $C_{3-8}$cycloalkyl or $C_{4-8}$cycloalkenyl optionally substituted by I or 2 halogens of atom weight of I8 to 8O or $C_{1-2}$alkyl groups; $C_{3-8}$cycloalkyl-$C_{1-3}$alkyl or $C_{4-8}$cycloalkenyl-$C_{1-3}$alkyl optionally mono- or di-ring substituted by halo of atom weight of I8 to 8O or $C_{1-2}$alkyl groups; or group $G_1$

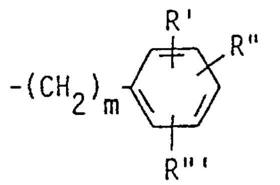

(G1)

in which m is O to 3,
R′ and R″ are independently H, $C_{1-4}$alkyl, $C_{1-4}$alkoxy, $C_{1-4}$alkylthio, $CF_3$, halo of atomic weight of from I8 to 8O or $NO_2$,
R‴ is H, $C_{1-3}$alkyl or halo of atomic weight of I8 to 8O, or
two of R′, R″ and R‴ together form $C_{1-2}$alkylenedioxy with the other being H,
in free form or in salt form,
which comprises reacting the compound of the formula II:

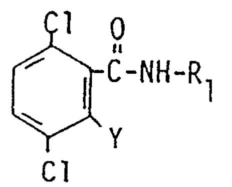

II

wherein $R_1$ is OH or $NH_2$,
and Y is as defined in Claim I,
with a compound of formula III:

X-A-CO-ZR III

wherein X is halogen
and A, Z and R are as defined in Claim I,
followed where desired by transesterification of the thus obtained compounds of formula I in which R is other than H to other compounds of formula I in which R is other than H, and optionally reacting the thus obtained compounds of formula I with a salt forming base.

**2.** A herbicidal composition comprising a compound of formula I, stated in Claim I, in free form or in agriculturally acceptable salt form, and an agriculturally acceptable carrier.

**3.** The composition of Claim 2, wherein
A is $C_{1-3}$O-alkylene
R is H, $C_{1-6}$alkyl, $C_{3-6}$alkenyl, $C_{2-5}$haloalkyl comprising I to 6 halogens, $C_{2-6}$alkoxyalkyly, $C_{3-6}$alkoxyalkoxyalkyl, $C_{3-6}$cycloalkyl, $C_{3-6}$cycloalkyl-$C_{1-3}$alkyl, or group $G_1$ in which
m is O or I,
R′ is H, $C_{1-4}$alkyl, halogen, $NO_2$,
R″ is H, halogen or $C_{1-4}$alkyl,
or R′ and R″ together form $C_{1-2}$alkylenedioxy
and R‴ is H or halogen,
any halogen substituent being selected from Cl and F.

**4.** A composition of Claim 3, wherein Y is $OCH_3$ and A is $OCH_2$.

**5.** A composition of Claim 4, wherein R is group $G_1$.

**6.** A composition of Claim 5, wherein m is I.

**7.** A composition of Claim 6, wherein R′ is $CH_3$, F, Cl or $NO_2$, R″ is H, Cl or $NO_2$, R″ is H, Cl or $CH_3$ and R‴ is H.

8. The composition of Claim 7, in which
a) R' is 4-$CH_3$ and R" is H, or
b) R' is 3-$CH_3$ and R" is H, or
c) R' is 2-Cl and R" is 4-Cl, or
d) R' is 3-Cl and R" is 4-Cl, or
e) R' is 3-Cl and R" is H, or
f) R' is 2-Cl and R" is H, or
g) R' is 3-Cl and R" is 5-Cl, or
h) R' is 4-F and R" is H, or
i) R' is 4-$NO_2$ and R" is H.

**Revendications**

**Revendications pour les Etats contractants suivants : BE, CH, DE, FR, GB, GR, IT, LI, NL.**

1. Les composés de formule I dans laquelle

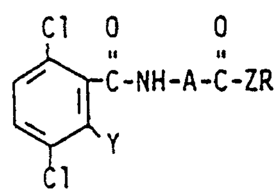

I

Y signifie Cl ou $OCH_3$,
A signifie un groupe O-alkylène ayant de 1 à 5 atomes de carbone, un groupe O-alcénylène ayant de 3 à 6 atomes de carbone dans lequel l'insaturation n'est pas adjacente à l'atome d'oxygène de ce groupe ou un groupe NH-alkylène dans lequel le reste alkylène comprend de 1 à 5 atomes de carbone, le O- et le NH- de ces groupes étant fixés au groupe NH qui est adjacent à A,
Z signifie l'oxygène ou le soufre,
R signifie H, un groupe alkyle en $C_1$-$C_{12}$, alcényle en $C_3$ -$C_8$ , alcynyle en $C_3$ -$C_8$ , haloalkyle en $C_2$ $C_{10}$ contenant de 1 à 6 halogènes d'un poids atomique de 18 à 80, alcoxyalkyle en $C_2$-$C_{10}$, alcoxyalcoxyalkyle en $C_3$-$C_{10}$, cycloalkyle en $C_3$-$C_8$ ou cycloalcényle en $C_4$-$C_8$ éventuellement substitués par 1 ou 2 halogènes d'un poids atomique de 18 à 80 ou par des groupes alkyle en $C_1$-$C_2$; (cycloalkyl en $C_3$-$C_8$)-alkyle en $C_1$-$C_3$ ou (cycloalcényl en $C_4$-$C_8$)-alkyle en $C_1$-$C_3$ éventuellement mono- ou di-substitués dans le cycle par un halogène d'un poids atomique de 18 à 80 ou par des groupes alkyle en $C_1$-$C_2$; ou un groupe $G_1$

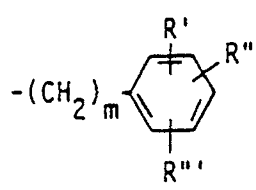

($G_1$)

où m signifie 0 à 3,
R' et R" signifient indépendamment H, un groupe alkyle en $C_1$-$C_4$, alcoxy en $C_1$-$C_4$, alkylthio en $C_1$-$C_4$, $CF_3$, un halogène d'un poids atomique de 18 à 80, ou $NO_2$,
R''' signifie H, un groupe alkyle en $C_1$-$C_3$ ou un halogène d'un poids atomique de 18 à 80, ou bien deux des symboles R', R" et R''' forment ensemble un groupe alkylènedioxy en $C_1$-$C_2$, l'autre symbole signifiant H,
sous forme libre ou sous forme de sel.

2. Un composé selon la revendication 1, dans lequel
A signifie un groupe O-alkylène en $C_1$-$C_3$,
R signifie H, un groupe alkyle en $C_1$-$C_6$, alcényle en $C_3$ -$C_6$, haloalkyle en $C_2$-$C_5$ comprenant

de 1 à 6 halogènes, alcoxyalkyle en $C_2$-$C_6$, alcoxyalcoxyalkyle en $C_3$ -$C_6$, cycloalkyle en $C_3$-$C_6$, (cycloalkyl en $C_3$-$C_6$)-alkyle en $C_1$-$C_3$ ou un groupe $G_1$ dans lequel

m signifie 0 ou 1,

R' signifie H, un groupe alkyle en $C_1$-$C_4$, alcoxy en $C_1$-$C_4$, un halogène ou $NO_2$,

R" signifie H, un halogène ou un groupe alkyle en $C_1$-$C_4$, ou bien

R' et R" forment ensemble un groupe alkylènedioxy en $C_1$-$C_2$ et

R"' signifie H ou un halogène,

tout substituant halogène étant choisi parmi Cl et F.

**3.** Un composé selon la revendication 2, dans lequel Y signifie $OCH_3$ et A signifie $OCH_2$.

**4.** Un composé selon la revendication 3, dans lequel R signifie un groupe $G_1$.

**5.** Un composé selon la revendication 4, dans lequel m signifie 1.

**6.** Un composé selon la revendication 5, dans lequel R' signifie $CH_3$, F, Cl ou $NO_2$, R" signifie H, Cl ou $CH_3$ et R"' signifie H.

**7.** Le composé selon la revendication 6, dans lequel
a) R' signifie 4-$CH_3$ et R" signifie H, ou
b) R' signifie 3-$CH_3$ et R" signifie H, ou
c) R' signifie 2-Cl et R" signifie 4-Cl, ou
d) R' signifie 3-Cl et R" signifie 4-Cl, ou
e) R' signifie 3-Cl et R" signifie H, ou
f) R' signifie 2-Cl et R" signifie H, ou
g) R' signifie 3-Cl et R" signifie 5-Cl, ou
h) R' signifie 4-F et R" signifie H, ou
i) R' signifie 4-$NO_2$ et R" signifie H.

**8.** Un procédé de préparation d'un composé de formule I tel que spécifié à la revendication 1, sous forme libre ou sous forme de sel, qui comprend la réaction du composé de formule II

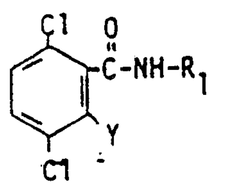
II

dans laquelle
$R_1$ signifie OH ou $NH_2$, et
Y est tel que défini à la revendication 1,
avec un composé de formule III

X-A-CO-ZR III

dans laquelle
X signifie un halogène, et A, Z et R sont tels que définis à la revendication 1, suivie, si désiré, par la transestérification des composés de formule I ainsi obtenus où R a une signification autre que H en d'autres composés de formule I où R a une signification autre que H, et éventuellement la réaction des composés de formule I ainsi obtenus avec une base formant un sel.

**9.** Une composition herbicide, comprenant un composé de formule I selon l'une quelconque des revendications 1 à 7, sous forme libre ou sous forme d'un sel acceptable en agriculture, et un support acceptable en agriculture.

**10.** Un procédé pour combattre les mauvaises herbes, qui comprend l'application sur les mauvaises herbes

ou leur zone de croissance d'une quantité efficace du point de vue herbicide d'un composé de formule I selon l'une quelconque des revendications 1 à 7, sous forme libre ou sous forme d'un sel acceptable en agriculture.

**11.** Le procédé selon la revendication 10, dans lequel les composés sont appliqués en pré-levée des plantes.

**12.** Le procédé selon la revendication 10 ou 11, qui comprend l'application des composés sur une zone de croissance du maïs en une quantité suffisante pour combattre les mauvaises herbes sans pratiquement endommager le maïs.

**Revendications pour les Etats contractants suivants : AU, ES.**

**1.** Un procédé de préparation d'un composé de formule I

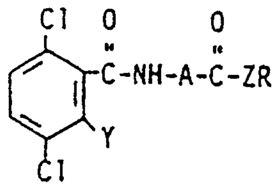

I

dans laquelle

Y signifie Cl ou $OCH_3$,

A signifie un groupe O-alkylène ayant de 1 à 5 atomes de carbone, un groupe O-alcénylène ayant de 3 à 6 atomes de carbone dans lequel l'insaturation n'est pas adjacente à l'atome d'oxygène de ce groupe ou un groupe NH-alkylène dans lequel le reste alkylène comprend de 1 à 5 atomes de carbone, le O- et le NH- de ces groupes étant fixés au groupe NH qui est adjacent à A,

Z signifie l'oxygène ou le soufre,

R signifie H, un groupe alkyle en $C_1$-$C_{12}$, alcényle en $C_3$-$C_8$, alcynyle en $C_3$-$C_8$, haloalkyle en $C_2$-$C_{10}$ contenant de 1 à 6 halogènes d'un poids atomique de 18 à 80, alcoxyalkyle en $C_2$-$C_{10}$, alcoxyalcoxyalkyle en $C_3$ -$C_{10}$, cycloalkyle en $C_3$-$C_8$ ou cycloalcényle en $C_4$-$C_8$ éventuellement substitués par 1 ou 2 halogènes d'un poids atomique de 18 à 80 ou par des groupes alkyle en $C_1$-$C_2$; (cycloalkyl en $C_3$-$C_8$)-alkyle en $C_1$-$C_3$ ou (cycloalcényl en $C_4$-$C_8$)-alkyle en $C_1$-$C_3$ éventuellement mono- ou di-substitués dans le cycle par un halogène d'un poids atomique de 18 à 80 ou par des groupes alkyle en $C_1$-$C_2$; ou un groupe $G_1$

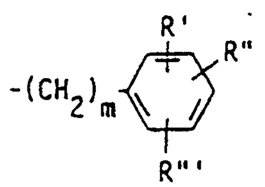

$(G_1)$

où m signifie 0 à 3,

R' et R" signifient indépendamment H, un groupe alkyle en $C_1$ -$C_4$, alcoxy en $C_1$-$C_4$, alkylthio en $C_1$-$C_4$, $CF_3$, un halogène d'un poids atomique de 18 à 80, ou $NO_2$,

R"' signifie H, un groupe alkyle en $C_1$-$C_3$ ou un halogène d'un poids atomique de 18 à 80, ou bien deux des symboles R', R" et R'" forment ensemble un groupe alkylènedioxy en $C_1$-$C_2$, l'autre symbole signifiant H,

sous forme libre ou sous forme de sel,

qui comprend la réaction du composé de formule II dans laquelle

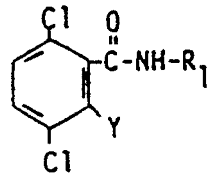

II

$R_1$ signifie OH ou $NH_2$, et Y est tel que défini à la revendication 1, avec un composé de formule III

X-A-CO-ZR III

dans laquelle
X signifie un halogène, et
A, Z et R sont tels que définis à la revendication 1, suivie, si désiré, par la transestérification des composés de formule I ainsi obtenus où R a une signification autre que H en d'autres composés de formule I où R a une signification autre que H, et éventuellement la réaction des composés de formule I ainsi obtenus avec une base formant un sel.

**2.** Une composition herbicide comprenant un composé de formule I tel que spécifié à la revendication 1, sous forme libre ou sous forme d'un sel acceptable en agriculture, et un support acceptable en agriculture.

**3.** La composition selon la revendication 2, dans laquelle
A signifie un groupe O-alkylène en $C_1$-$C_3$,
R signifie H, un groupe alkyle en $C_1$-$C_6$, alcényle en $C_3$-$C_6$, haloalkyle en $C_2$-$C_5$ comprenant de 1 à 6 halogènes, alcoxyalkyle en $C_2$-$C_6$, alcoxyalcoxyalkyle en $C_3$-$C_6$, cycloalkyle en $C_3$-$C_6$, (cycloalkyl en $C_3$-$C_6$)-alkyle en $C_1$-$C_3$ ou un groupe $G_1$ dans lequel
m signifie 0 ou 1,
R' signifie H, un groupe alkyle en $C_1$-$C_4$, alcoxy en $C_1$-$C_4$ , un halogène ou $NO_2$,
R" signifie H, un halogène ou un groupe alkyle en $C_1$-$C_4$, ou bien
R' et R" forment ensemble un groupe alkylènedioxy en $C_1$-$C_2$ et
R"' signifie H ou un halogène,
tout substituant halogène étant choisi parmi Cl et F.

**4.** Une composition selon la revendication 3, dans laquelle Y signifie $OCH_3$ et A signifie $OCH_2$.

**5.** Une composition selon la revendication 4, dans laquelle R signifie un groupe $G_1$.

**6.** Une composition selon la revendication 5, dans laquelle m signifie 1.

**7.** Une composition selon la revendication 6, dans laquelle R' signifie $CH_3$, F, Cl ou $NO_2$, R" signifie H, Cl ou $NO_2$, R" signifie H, Cl ou $CH_3$ et R"' signifie H.

**8.** La composition selon la revendication 7, dans laquelle
a) R' signifie 4-$CH_3$ et R" signifie H, ou
b) R' signifie 3-$CH_3$ et R" signifie H, ou
c) R' signifie 2-Cl et R" signifie 4-Cl, ou
d) R' signifie 3-Cl et R" signifie 4-Cl, ou
e) R' signifie 3-Cl et R" signifie H, ou
f) R' signifie 2-Cl et R" signifie H, ou
g) R' signifie 3-Cl et R" signifie 5-Cl, ou
h) R' signifie 4-F et R" signifie H, ou
i) R' signifie 4-$NO_2$ et R" signifie H.

**Patentansprüche**
**Patentansprüche für folgende Vertragsstaaten : BE, CH, DE, FR, GB, GR, IT, LI, NL**

**1.** Verbindungen der Formel I

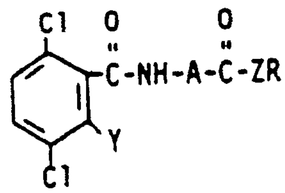

I

worin

Y C1 oder $OCH_3$ ist,

A ein O-Alkylenrest mit 1 bis 5 Kohlenstoffatomen, ein O-Alkenylenrest mit 3 bis 6 Kohlenstoffatomen, bei dem die ungesättigte Bindung nicht dem Sauerstoffatom benachbart ist, oder NH-Alkylenrest, bei dem der Alkylenrest 1 bis 5 Kohlenstoffatome hat, ist, wobei O- und NH- an das zu A benachbarte NH gebunden ist,

Z Sauerstoff oder Schwefel ist,

R H, ein $C_1$-$C_{12}$-Alkyl-, $C_3$-$C_8$-Alkenyl-, $C_3$-$C_8$-Alkinyl-, $C_2$-$C_{10}$-Halogenalkylrest, der 1 bis 6 Halogenatome mit einem Atomgewicht von 18 bis 80 enthält, $C_2$-$C_{10}$-Alkoxyalkyl-, $C_3$-$C_{10}$-Alkoxyalkoxyalkyl-, $C_3$-$C_8$-Cycloalkyl- oder $C_4$-$C_8$-Cycloalkenylrest ist, der gegebenenfalls mit 1 oder 2 Halogenatomen mit einem Atomgewicht von 18 bis 80 oder mit $C_1$-$C_2$-Alkylgruppen substituiert ist; ein $C_3$-$C_8$-Cycloalkyl-$C_1$-$C_3$-alkyl-oder $C_4$-$C_8$-Cycloalkenyl-$C_1$-$C_3$-alkylrest ist, der gegebenenfalls ein Mono- oder Di-Ring ist, der mit Halogen mit einem Atomgewicht von 18 bis 80 oder $C_1$-$C_2$-Alkylgruppen substituiert ist, oder eine Gruppe $G_1$

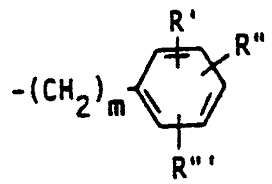

($G_1$)

worin m 0 bis 3 ist,

R' und R" unabhängig H, einen $C_1$-$C_4$-Alkyl-, $C_1$-$C_4$-Alkoxy-, $C_1$-$C_4$-Alkylthio-, $CF_3$-Rest, Halogen mit einem Atomgewicht von 18 bis 80 oder $NO_2$ bedeuten,

R'" H, ein $C_1$-$C_3$-Alkylrest oder Halogen mit einem Atomgewicht von 18 bis 80 ist,

oder zwei der Reste R', R" und R'" zusammen einen $C_1$-$C_2$-Alkylendioxyrest bilden, wobei der andere Rest H ist, in freier Form oder in Salzform.

**2.** Verbindung nach Anspruch 1, worin

A ein $C_1$-$C_3$-O-Alkylenrest ist,

R H, ein $C_1$-$C_6$-Alkyl-, $C_3$-$C_6$-Alkenyl-, $C_2$-$C_5$-Halogenalkylrest, der 1 bis 6 Halogene enthält, ein $C_2$-$C_6$-Alkoxyalkyl-, $C_3$-$C_6$-Alkoxyalkoxyalkyl-, $C_3$-$C_6$-Cycloalkyl-, $C_3$-$C_6$-Cycloalkyl-$C_1$-$C_3$-alkylrest oder die Gruppe $G_1$ ist, worin

m 0 oder 1 ist,

R' H, ein $C_1$-$C_4$-Alkyl-, $C_1$-$C_4$-Alkoxyrest, Halogen, $NO_2$ ist,

R" H, Halogen oder ein $C_1$-$C_4$-Alkylrest ist, oder R' und R" zusammen einen $C_1$-$C_2$-Alkylendioxyrest bilden, und

R'" H oder Halogen ist,

wobei jeder Halogensubstituent ausgewählt ist aus Cl und F.

**3.** Verbindung nach Anspruch 2, worin Y $OCH_3$ und A $OCH_2$ ist.

**4.** Verbindung nach Anspruch 3, worin R die Gruppe $G_1$ ist.

**5.** Verbindung nach Anspruch 4, worin m 1 ist.

6. Verbindung nach Anspruch 5, worin R' $CH_3$, F, Cl oder $NO_2$ ist, R" H, Cl oder $CH_3$ ist und R'" H ist.

7. Verbindung nach Anspruch 6, worin
   a) R' 4-$CH_3$ und R" H ist, oder
   b) R' 3-$CH_3$ und R" H ist, oder
   c) R' 2-Cl und R" 4-Cl ist, oder
   d) R' 3-Cl und R" 4-Cl ist, oder
   e) R' 3-Cl und R" H ist, oder
   f) R' 2-Cl und R" H ist, oder
   g) R' 3-Cl und R" 5-Cl ist, oder
   h) R' 4-F und R" H ist, oder
   i) R' 4-$NO_2$ und R" H ist.

8. Verfahren zur Herstellung einer Verbindung der Formel I, wie in Anspruch 1 angegeben, in freier Form oder Salzform, umfassend, daß man die Verbindung der Formel II:

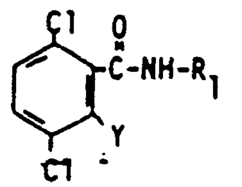

II

worin $R_1$ OH oder $NH_2$ ist und Y wie in Anspruch 1 definiert ist, mit einer Verbindung der Formel III:

X-A-CO-ZR [I]

worin X Halogen ist und A, Z und R wie in Anspruch 1 definiert sind, umsetzt und anschließend, falls erwünscht, die so erhaltenen Verbindungen der Formel I, worin R etwas anderes als H bedeutet, zu anderen Verbindungen der Formel I, worin R etwas anderes als H bedeutet, umestert und gegebenenfalls die so erhaltenen Verbindungen der Formel I mit einer ein Salz bildenden Base umsetzt.

9. Herbizidzusammensetzung, umfassend eine Verbindung der Formel I nach einem der Ansprüche 1 bis 7 in freier Form oder in Form eines landwirtschaftlich annehmbaren Salzes und einen landwirtschaftlich annehmbaren Träger.

10. Verfahren zur Bekämpfung von Unkräutern, umfassend, daß man auf die Unkräuter oder ihren Ort eine herbizid wirksame Menge einer Verbindung der Formel I nach einem der Ansprüche 1 bis 7 in freier Form oder in Form eines landwirtschaftlich annehmbaren Salzes aufbringt.

11. Verfahren nach Anspruch 10, worin die Verbindungen vor Auflauf der Pflanzen aufgebracht werden.

12. Verfahren nach Anspruch 10 oder 11, umfassend, daß man an einem Ort, wo Mais wächst, die Verbindungen mit einer Rate aufbringt, die ausreicht, um Unkräuter zu bekämpfen, ohne den Mais wesentlich zu schädigen.

**Patentansprüche für folgende Vertragsstaaten : AT und ES**

1. Verfahren zur Herstellung einer Verbindung der Formel I

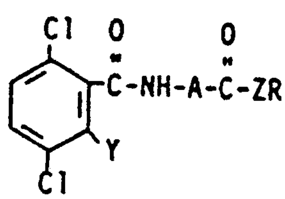

I

worin

Y Cl oder $OCH_3$ ist,

A ein O-Alkylenrest mit 1 bis 5 Kohlenstoffatomen, ein O-Alkenylenrest mit 3 bis 6 Kohlenstoffatomen, bei dem die ungesättigte Bindung nicht dem Sauerstoffatom benachbart ist, oder NH-Alkylenrest, bei dem der Alkylenrest 1 bis 5 Kohlenstoffatome hat, ist, wobei O- und NH- an das zu A benachbarte NH gebunden ist,

Z Sauerstoff oder Schwefel ist,

R H, ein $C_1$-$C_{12}$-Alkyl-, $C_3$-$C_8$-Alkenyl-, $C_3$-$C_8$-Alkinyl-, $C_2$-$C_{10}$-Halogenalkylrest, der 1 bis 6 Halogenatome mit einem Atomgewicht von 18 bis 80 enthält, $C_2$-$C_{10}$-Alkoxyalkyl-, $C_3$-$C_{10}$-Alkoxyalkoxyalkyl-, $C_3$-$C_8$-Cycloalkyl- oder $C_4$-$C_8$-Cycloalkenylrest ist, der gegebenenfalls mit 1 oder 2 Halogenatomen mit einem Atomgewicht von 18 bis 80 oder mit $C_1$-$C_2$-Alkylgruppen substituiert ist; ein $C_3$-$C_8$-Cycloalkyl-$C_1$-$C_3$-alkyl-oder $C_4$-$C_8$-Cycloalkenyl-$C_1$-$C_3$-alkylrest ist, der gegebenenfalls ein Mono- oder Di-Ring ist, der mit Halogen mit einem Atomgewicht von 18 bis 80 oder $C_1$-$C_2$-Alkylgruppen substituiert ist, oder eine Gruppe

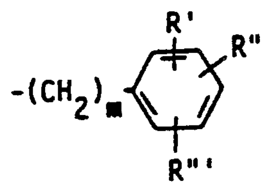

(G1)

$G_1$ worin m 0 bis 3 ist,

R' und R" unabhängig H, einen $C_1$-$C_4$-Alkyl-, $C_1$-$C_4$-Alkoxy-, $C_1$-$C_4$-Alkylthio-, $CF_3$-Rest, Halogen mit einem Atomgewicht von 18 bis 80 oder $NO_2$ bedeuten,

R'" H, ein $C_1$-$C_3$-Alkylrest oder Halogen mit einem Atomgewicht von 18 bis 80 ist,

oder zwei der Reste R', R" und R'" zusammen einen $C_1$-$C_2$-Alkylendioxyrest bilden, wobei der andere Rest H ist, in freier Form oder in Salzform, umfassend, daß man die Verbindungen der Formel II

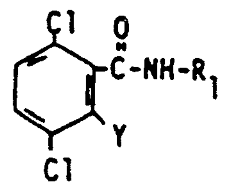

II

worin $R_1$ OH oder $NH_2$ ist und Y wie in Anspruch 1 definiert ist, mit einer Verbindung der Formel III:

X-A-C0-ZR [1]

worin X Halogen ist und A, Z und R wie in Anspruch 1 definiert sind, umsetzt und anschließend, falls erwünscht, die so erhaltenen Verbindungen der Formel I, worin R etwas anderes als H bedeutet, zu anderen Verbindungen der Formel I, worin R etwas anderes als H bedeutet, umestert und gegebenenfalls die so erhaltenen Verbindungen der Formel I mit einer ein Salz bildenden Base umsetzt.

2. Herbizidzusammensetzung, enthaltend eine Verbindung der Formel I, wie in Anspruch 1 definiert, in freier Form oder in Form eines landwirtschaftlich annehmbaren Salzes und einen landwirtschaftlich annehmbaren Träger.

3. Zusammensetzung nach Anspruch 2, worin

A ein $C_1$-$C_3$-O-Alkylenrest ist,

R H, ein $C_1$-$C_6$-Alkyl-, $C_3$-$C_6$-Alkenyl-, $C_2$-$C_5$-Halogenalkylrest, der 1 bis 6 Halogene enthält, ein $C_2$-$C_6$-Alkoxyalkyl-, $C_3$-$C_6$-Alkoxyalkoxyalkyl-, $C_3$-$C_6$-Cycloalkyl-, $C_3$-$C_6$-Cycloalkyl-$C_1$-$C_3$-alkylrest oder die Gruppe $G_1$ ist, worin

m 0 oder 1 ist,

R' H, ein $C_1$-$C_4$-Alkyl-, $C_1$-$C_4$-Alkoxyrest, Halogen, $NO_2$ ist,

R" H, Halogen oder ein $C_1$-$C_4$-Alkylrest ist,
oder R' und R" zusammen einen $C_1$-$C_2$-Alkylendioxyrest bilden, und
R'" H oder Halogen ist,
wobei jeder Halogensubstituent ausgewählt ist aus Cl und F.

**4.** Zusammensetzung nach Anspruch 3, worin Y $OCH_3$ und A $OCH_2$ ist.

**5.** Zusammensetzung nach Anspruch 4, worin R die Gruppe $G_1$ ist.

**6.** Zusammensetzung nach Anspruch 5, worin m 1 ist.

**7.** Zusammensetzung nach Anspruch 6, worin R, $CH_3$, F, Cl oder $NO_2$ ist, R" H, Cl oder $CH_3$ ist und R'" H ist.

**8.** Zusammensetzung nach Anspruch 7, worin
a) R' 4-$CH_3$ und R" H ist, oder
b) R' 3-$CH_3$ und R" H ist, oder
c) R' 2-Cl und R" 4-Cl ist, oder
d) R' 3-Cl und R" 4-Cl ist, oder
e) R' 3-Cl und R" H ist, oder
f) R' 2-Cl und R" H ist, oder
g) R' 3-Cl und R" 5-Cl ist, oder
h) R' 4-F und R" H ist, oder
i) R' 4-$NO_2$ und R" H ist.